(19) Europäisches Patentamt
European Patent Office
Office européen des brevets

(11) Numéro de publication: **0 341 147**
**A2**

(12) **DEMANDE DE BREVET EUROPEEN**

(21) Numéro de dépôt: **89401236.8**

(22) Date de dépôt: **02.05.89**

(51) Int. Cl.[4]: **C 07 F 9/165**
C 10 M 137/10, C 10 M 163/00
//C10N30:00,C10N30:06,
C10N30:10,C10N70:00

(30) Priorité: **06.05.88 FR 8806091**

(43) Date de publication de la demande:
**08.11.89 Bulletin 89/45**

(84) Etats contractants désignés:
**BE DE ES GB IT NL**

(71) Demandeur: **ELF FRANCE, Société Anonyme dite:**
**Tour Elf 2 place de la Coupole La Défense 6**
**F-92400 Courbevoie (FR)**

(72) Inventeur: **Germanaud, Laurent**
**79, route Neuve**
**F-69540 Irigny (FR)**

**Nouguier, Robert**
**Impasse des Catherinettes**
**F-13380 Plan de Cuques (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

(54) **Additifs aux huiles lubrifiantes à effet extrême-pression, antiusure et antioxydant leur procédé de préparation et compositions lubrifiantes renfermant lesdits additifs.**

(57) Cette invention concerne l'utilisation comme additifs aux huiles lubrifiantes, à effet extrême-pression, antiusure et antioxydant de disulfures disymétriques thiophosphorés de formule générale :

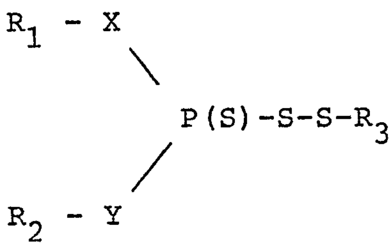

ou X et Y représentent un atome d'oxygène ou de soufre ou un groupe méthylène et $R_1$, $R_2$ et $R_3$ représentent un radical hydrocarboné, un polyether, un polythioether ou l'atome d'hydrogène.

On décrit également un procédé de préparation par catalyse de transfert de phase.

EP 0 341 147 A2

## Description

# ADDITIFS AUX HUILES LUBRIFIANTES A EFFET EXTREME-PRESSION, ANTIUSURE ET ANTIOXYDANT LEUR PROCEDE DE PREPARATION ET COMPOSITIONS LUBRIFIANTES RENFERMANT LESDITS ADDITIFS.

La présente invention concerne l'utilisation comme additifs à effet extrême-pression, antiusure et antioxydant de disulfures thiophosphorés et un procédé pour leur préparation.

Il est connu d'ajouter aux huiles lubrifiantes des additifs dont le rôle est d'améliorer la résistance à l'oxydation et à l'usure de ces huiles.

Ainsi les dialkyldithiophosphates de zinc, tels que ceux décrits dans les brevets américains 4 436400, 4 466895, 4 587062 et dans le brevet belge 896 226 ont un effet antiusure et antioxydant. Cependant ces additifs perdent leur efficacité lorsque les pièces métalliques lubrifiées sont soumises à des contraintes élevées. Ils ne peuvent donc pas être utilisés comme additifs extrême-pression. De plus ces sels métalliques interagissent dans certains cas avec les dispersants à base d'amines ou de polyamines altérant ainsi les propriétés antiusure des dithiophosphates. Par ailleurs la présence des métaux peut conduire à l'apparition de cendres qui va à l'encontre de l'effet recherché.

Contrairement aux précédents, une autre classe d'additifs, les oléfines polysulfurées décrites par exemple dans les brevets américains 4 097387, 4 119545, 4 119550 et 4198305 sont utilisables dans les conditions d'extrême-pression. Ces produits sont de bons additifs antiusure et extrême-pression mais ils ne présentent pas d'effet antioxydant.

Nous avons trouvé maintenant un additif aux huiles lubrifiantes qui présente au même temps un effet antiusure, antioxydant et extrême-pression.

L'additif selon l'invention se caractérise en ce qu'il consiste en un disulfure disymétrique thiophosphoré répondant à la formule générale :

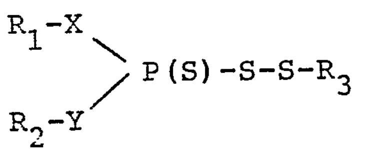

(I)

où X et Y identiques ou différents représentent un atome d'oxygène ou de soufre ou un groupe méthylène.

Si X et Y représentent un atome d'oxygène ou de soufre, $R_1$, $R_2$ et $R_3$ identiques ou différents représentent un radical hydrocarboné acyclique ou cyclique, saturé, insaturé, ou aromatique ou une chaine de formule générale $R_4-Z_1-(R_5-Z_2)_n-R_5-$ où $Z_1$ et $Z_2$ identiques ou différents correspondent à un atome d'oxygène ou de soufre, $R_4$ correspond à un groupe alkyle, $R_5$ correspond à un groupe alkylène et n est compris entre 0 à 8.

Si X et Y représentent un groupe methylène, $R_1$ et $R_2$ identiques ou différents représentent un atome d'hydrogène ou un radical hydrocarboné et $R_3$ représente un radical hydrocarboné comme décrits précédemment.

Si X et Y correspondent à des atomes d'oxygène ou de soufre, $R_1$ et $R_2$ sont en général des groupes alkyles, des cycles saturés ou aromatiques ou des chaines de formule générale $R_4-Z_1-(R_5-Z_2)_n-R_5-$

Les groupes alkyles $R_1$ et $R_2$, sont en général en $C_1$ à $C_{22}$, de préference en $C_1$ à $C_{12}$ ou mieux en $C_1$ à $C_8$.

Les cycles saturés ou aromatiques sont en général en $C_5$ ou $C_6$, de préférence en $C_6$. Ces cycles peuvent être substitués ou non.

Dans la formule générale $R_4-Z_1-(R_5-Z_2)_n-R_5-$ $Z_1$ et $Z_2$ correspondent de préférence à un atome d'oxygène, $R_4$ correspond à un groupe alkyle en $C_1$ à $C_{12}$ et de préférence en $C_1$ à $C_6$, $R_5$ correspond à un groupe alkylène en $C_2$ à $C_4$ et n est compris entre 0 à 8 et de préférence entre 0 à 3.

Si X et Y correspondent à des groupes méthylènes, $R_1$ et $R_2$ correspondent en général à l'hydrogène ou un groupe alkyle en $C_1$ à $C_{21}$, de préférence en $C_1$ à $C_{11}$ ou mieux en $C_1$ à $C_5$.

Indépendamment de la nature de X et Y, $R_3$ correspond en général à un groupe alkyle saturé ou insaturé en $C_1$ à $C_{12}$, de préférence en $C_1$ à $C_6$ ou mieux en $C_2$ à $C_4$ ou à un groupe aralkyle.

$R_3$ est choisi de préférence parmi les groupes n-propyle, n-butyle, iso-butyle, allyle, méthallyle ou benzyle.

Les additifs de formule générale (I) où X et Y correspondent à l'oxygène, donc les O,O-diesters de l'acide dithiophosphorique, sont préférés.

Il existe plusieurs procédés de préparation de composés de formule générale (I).

Les brevets américains 3 109770 et 4 496683 décrivent la réaction d'un dialkyldithiophosphate de sodium avec un halogénure d'alkylsulfényle ou encore la réaction d'un halogénure de dialkyldithiophosphoryle sulfényle avec un mercaptoate de sodium. Cette méthode nécessite la préparation de l'halogénure de sulfényle, un produit hautement toxique comme intermédiaire.

Les brevets américains 3 705293, 3 859297, 4 006155 et 4 119780 concernent la réaction d'un composé à fonction(s) -SH comme par exemple un acide dialkyldithiophosphorique avec un sulfénamide par exemple le N(alkylthio)phtalamide. Ici encore l'intermediaire sulfénamide est un produit toxique et corrosif.

Le brevet américain 3 035082 mentionne l'obtention de produits de formule générale (I) par condensation d'un acide dialkyldithiophosphorique sur un S-alkylthiosulfate en phase aqueuse. Les produits doivent être extraits de la phase aqueuse par un solvant organique et le rendement de cette synthèse ne dépasse pas 50 à

60 %.

Notre procédé permet d'éviter l'étape d'extraction et au même temps d'augmenter considérablement le rendement de cette synthèse.

Notre procédé de synthèse de disulfures de formule générale (I) consiste par la condensation d'un composé de formule générale

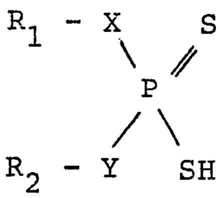

(II)

avec un S-alkylthiosulfate de formule générale

$R_3$-S-$SO_3M$ (III)

où $R_1$ $R_2$, $R_3$, X et Y ont les significations précitées et M représente un métal alcalin, alcalinoterreux ou un ion ammonium, caractérisé en ce que la condensation a lieu dans un milieu biphasique comportant de l'eau et un solvant organique en présence d'un agent de transfert de phase.

La synthèse des composés de formule générale (II) est connue, elle est décrite par exemple dans l'ouvrage : ORGANOPHOSPHORUS COMPOUNDS DE G.M. KOSOLAPOFF (John Wiley, 1950, New York).

Par exemple les composés de formule (II) dans lesquelles X et Y sont identiques et représentent un atome d'oxygène, donc les O,O-diesters de l'acide dithiophosphorique peuvent être préparés par réaction de composés à fonction alcool avec le pentasulfure de phosphore. On utilise en général des alcools aliphatiques primaires ou secondaires ou bien des phénols.

Comme exemples on peut citer le n-propanol, l'isopropanol, le n-butanol, l'isobutanol, le n-pentanol, l'isopentanol, l'hexanol, l'éthyl-2-hexanol, le methyl-4-pentanol-2, l'heptanol, le n-octanol, le teroctanol, le nonanol, le decanol, le cyclohexanol, le methylcyclohexanol, le phenol, le méthoxyphenol, le butylphénol, le nonylphenol ou le dodecylphenol.

On peut mentionner également les monoethers du glycol, comme le methoxy-2-ethanol, l'ethoxy-2-ethanol ou CELLOSOLVE,® le butoxy-2-ethanol ou bien des alcools polyethoxylés comme par exemple ceux commercialisés par RHONE-POULENC sous le nom de CEMULSOL®

En utilisant un 1,2 ou 1,3-glycol, on obtient un heterocycle à 5 ou 6 chainons qui renferme le phosphore.

Les composés de formule (II) dans lesquels X et Y identiques représentent un atome de soufre, donc les S,S-diesters de l'acide tetrathiophosphorique sont obtenus par réaction de mercaptans ou de thiophenols avec le pentasulfure de phosphore.

Parmi ces composés on peut mentionner l'éthanethiol, le propanethiol, le butanethiol, l'isobutanethiol, l'octanethiol, le dodecanethiol ou le thiophenol

Les composés de formule (II) dans lesquels X et Y identiques représentent un groupe methylène, donc les acides dialkyldithiophosphiniques peuvent être obtenus à partir d'halogénures de l'acide thiophosphinique par réaction avec le sulfure acide de sodium (NaHS) ou à partir de phosphines secondaires et du soufre élémentaire. Les acides diaryldithiophosphiniques se préparent avec d'excellents rendements à partir de composés aromatiques comme le benzène et le pentasulfure de phosphore en présence d'un catalyseur du type FRIEDEL et CRAFTS.

Dans le cadre de l'invention on utilise avantageusement des composés de formule (II) dans lesquels X et Y identiques représentent un atome d'oxygène.

Les S-alkylthiosulfates de formule générale (III) peuvent être préparés par toute méthode connue. Ainsi le brevet américain 2 004873 décrit la synthèse par chlorosulfonation d'un alkylmercaptan. Le brevet américain 4 191702 qui appartient au demandeur, décrit la synthèse des S-alkylthiosulfates par substitution d'un halogénure d'alkyle avec un ion thiosulfate dans un système biphasique.

Pour la préparation des composés de formule générale (I) il est particulièrement avantageux de préparer le S-alkylthiosulfate, dans un système biphasique eau, solvant organique, en présence d'un agent de transfert de phase et sans l'isoler, ajouter le composé de formule générale (II).

Il n'est pas nécessaire d'isoler le composé II au préalable il peut être utilisé sous forme de solution de synthèse. Dans ce cas le solvant organique renfermant le composé II est ajouté au système biphasique qui contient le S-alkylthiosulfate et un agent de transfert de phase.

La température de la réaction peut varier très largement, par exemple entre 5 et 150° C mais en général des températures de l'ordre de 40 à 90° C sont suffisantes.

Le temps de réaction est en général très court et ne dépasse pas 10 minutes à 5 heures.

Par agent de transfert de phase on entend à titre non limitatif tous les produits capables de former des ligands avec les métaux alcalins ou alcalinoterreux comme par exemple les ethers couronne et les sels d'ammonium et de phosphonium quaternaires décrits par DOCKS (Synthesis 8 141 (1973)) ou ceux décrits par E.V. DEHMLOW (Angew. Chemie Internat.ed. 13, (3) 170 (1974)) tels que les chlorures de trimethylbenzylammonium, triethylbenzylammonium, le bromure de tributylhexadecylphosphonium, le chlorure de dimethyl-phenyldodecylammonium et le chlorure de choline.

Les résines échangeuses d'ions sur lesquelles sont greffés des ammoniums quaternaires peuvent être également utilisées.

L'agent de transfert de phase est utilisé à une concentration comprise entre 0,2 et 10 % molaire par rapport aux composés de formule générale II et de préférence 0,5 à 8 % molaire.

Comme solvant organique on utilise les solvants non miscibles à l'eau et qui dissolvent des composés de formule générale I et II. On peut mentionner le chlorure de methylène ou bien les solvants aromatiques comme le toluène, le chlorobenzène ou les xylènes.

Les additifs selon l'invention sont incorporés dans les lubrifiantes d'origine pétrolière ou synthétique. Parmi les lubrifiants synthétiques on peut énumérer les glycols, les ethers et esters de glycols, les polyalkylèneglycols et leurs ethers et esters et les esters d'acides monocarboxyliques ou polycarboxyliques et de mono ou polyalcools.

On incorpore en général 0,1 à 10 % poids d'additif dans les huiles lubrifiantes.

En général 0,1 à 5 % poids est suffisant. Ces pourcentages correspondent à une teneur en soufre d'environ 0,02 à 4 %.

Les additifs selon l'invention peuvent être associés avec d'autres additifs usuels des huiles lubrifiantes tels que les détergents-dispersants traditionnels comme les alkylarylsulfonates et les alkylphénates de sodium, de calcium ou de magnésium et/ou des dispersants sans cendres comme les dérivés succiniques, des antioxydants tels que les phénols substitués ou les amines aromatiques.

Le pouvoir antiusure des additifs selon l'invention est déterminé à l'aide d'une machine 4 billes par mesure des diamètres des empreintes d'usure des billes fixes. Le pouvoir antioxydant des additifs est déterminé par la température du début de l'oxydation d'une huile lubrifiante en utilisant l'analyse calorimétrique différentielle.

Les performances de ces additifs sous l'action simultanée d'une pression d'oxygène et de la température sont mesurées par l'oxydation en présence de catalyseurs d'un mince film d'huile selon la méthode ASTM D-2277.

Les exemples suivants illustrent l'invention sans toutefois la limiter.

EXEMPLE 1 préparation du benzyldi(di n pentylthiophosphoryl) disulfure

$(n\ C_5H_{11}O)_2-\underset{\underset{S}{\|}}{P}-S-S-CH_2-\varphi$

a) à une suspension de $P_2S_5$ (14,7 g, 0,066 mole) dans 30 ml de toluène maintenue à 90° C on ajoute en 30 minutes 23,3 g (0,26 mole) de n-pentanol préalablement séché sur $CaCl_2$. La suspension est chauffée à la même température jusqu'à ce que le mélange devienne homogène.

b) On met à réagir 12,66 g (0,1 mole) de chlorure de benzyle dissous dans 50 ml de toluène avec 34,9 g (0,14 mole) de thiosulfate de sodium pentahydraté et 1,12 g (0,008 mole) de chlorure de choline dissous dans 20 ml d'eau. Le contenu du réacteur est agité mécaniquement 4 heures, la température étant maintenue à 70-80° C.

c) on ajoute la solution préparée en 1a à la solution préparée en 1b en 15 minutes environ en maintenant la température à 60-70° C. Après refroidissement, la phase organique est lavée 3 fois, puis séchée sur $Na_2S_2O_4$. Après évaporation du solvant, le produit est élué sur une colonne de silice en utilisant comme éluant un mélange pentane-éther (2000 ml, 95/5).

A la solution obtenue, on ajoute en agitant vigoureusement 200 ml de solution saturée de $Na_2CO_3$. Après séchage de la phase organique, les solvants sont évaporés et on récupère 36,8 g d'une huile jaune (rendement 94 %).

| | | | | | |
|---|---|---|---|---|---|
| Analyse | calculé | C 52,01, | H 7,45, | P 7,89, | S 24,37 |
| | trouvé | C 52,19, | H 7,87, | P 7,83, | S 24,8 |

RMN : $^{31}P$ non découplé 89,3 ppm, quintuplet $3J_{P-H}=9,2Hz$

EXEMPLE 2 préparation du benzyl (diisopropylthiophosphoryl) disulfure.

On opère comme dans l'exemple 1 mais en remplaçant les 23,3g (0,26 mole) de n-pentanol par 15,6 g (0,26 mole) d'isopropanol.

Le produit est obtenu sous forme d'une huile jaune (31 g, rendement 92 %).

| | | | | |
|---|---|---|---|---|
| Analyse | calculé | C 46,41, | H 6,29, | P 9,21 |
| | trouvé | C 45,10, | H 5,31, | P - |

RMN : $^{31}P$ découplé 86,4 ppm.RMN : $13_C$ (ppm) : 23,6, 42,9, 73,7, 127,6, 128,4, 129,3, 135,7

EXEMPLE 3 préparation de l'allyle (di-n-pentylthiophosphoryl) disulfure.

On opère comme dans l'exemple 1 mais en remplaçant les 12,66 g de chlorure de benzyle par 7,65g (0,1 mole) de chlorure d'allyle. Le produit est obtenu sous forme d'un liquide jaune avec un rendement de 90 %.

EXEMPLE 4

on opère comme dans l'exemple 1 mais en remplaçant 23,3 g (0,26 mole) de n-pentanol par 23,3 g (0,26 mole) d'alcool isoamylique. Le benzyl (diisoamylthiophosphoryl) disulfure est obtenu avec un rendement de 91 %.

EXEMPLE 5 (comparatif : sans agent de transfert de phase)

a) on prépare 0,132 mole d'acide diisopropyldithiophosphorique à partir de 14,7g (0,066 mole) de $P_2S_5$ dans 30 ml de toluène à laquelle on ajoute en 30 minutes 15,6 g (0,26 mole) d'alcool isopropylique. La solution est chauffée à 90° C pendant l'addition de l'alcool et est maintenue à cette température jusqu'à ce que le mélange devienne homogène.

b) on met à réagir 12,66g (0,1 mole) de chlorure de benzyle dans 50ml d'éthanol avec 34,9g (0,14 mole) de thiosulfate de sodium pentahydraté préalablement dissous dans 50ml d'eau. Le contenu du réacteur est maintenu agité pendant 8 heures, au reflux du solvant. Après la fin de la réaction, le solvant est évaporé et on recueille le thiosulfate de benzyle sous forme d'une poudre blanche.

c) on met en contact la solution dans le toluène de l'acide diisopropyldithiophosphorique préparée en 5a avec le thiosulfate de benzyle préparé en 5b et préalablement dissous dans 50ml d'eau. L'ensemble est chauffé pendant 1 heure en maintenant la température à 65-70° C. Après évaporation du solvant et purification selon l'exemple 1a, on récupère 20,2g de produit (Rt = 60 %).

EXEMPLE 6

Le pouvoir antiusure de la composition lubrifiante contenant comme huile de base, l'huile minérale 200 Neutral Solvent et comme additif un produit de l'invention, a été déterminé à l'aide de la machine 4 billes EP de SHELL dont la description figure dans "Annual BOOK OF ASTM STANDARDS" Part 24, pages 680 - 688, 1979.

Le test consiste à faire tourner une bille de 12 mm de diamètre avec une vitesse de rotation de 1500 tr/mn sur trois autres billes maintenues immobiles et recouvertes de lubrifiant. Une charge de 40 ou 60 daN est appliquée par un système de levier qui pousse les 3 billes fixes vers la bille supérieure placée dans un mandrin.

L'efficacité antiusure d'un lubrifiant est déterminée par la valeur moyenne des diamètres des empreintes d'usure sur les trois billes fixes, après une heure de fonctionnement.

Les compositions lubrifiantes ont été testées de telle sorte que la teneur en soufre apportée par les additifs soit égale à 0,4 %.

| Produit | % Produit dans huile 200N | Ø mm 40 daN | Ø mm 60 daN |
|---|---|---|---|
| - | - | 1,5 | 2,2 |
| exemple 1 | 1,63 | 0,46 | 0,91 |
| exemple 2 | 1,4 | 0,48 | 1,28 |
| exemple 3 | 1,42 | 0,45 | 0,87 |
| exemple 4[x] | 1,63 | 0,49 | 0,95 |
| exemple 4[xx] | 1,63 | 0,49 | 0,74 |

x produit après purification
xx produit brut non purifié.

EXEMPLE 7

Dans cet exemple on détermine le pouvoir antioxydant des additifs de l'invention par oxydation dynamique en utilisant l'analyse calorimétrique différentielle, avec une programmation de montée en température de 5° C/mn et un débit d'air de 10 l/h. On détermine ainsi la température du début d'oxydation de l'huile.

| | |
|---|---|
| huile 200N | T début oxydation 155° C |
| huile 200N + 1 % exemple 1 | = 208° C |
| huile 200N + 1 % Lz 1395 | = 195° C |

Le Lz 1395 est un dithiophosphate de zinc préparé à partir d'alcools ramifiés (% S = 19 %).

EXEMPLE 8

Dans cet exemple on détermine les performances des compositions lubrifiantes de l'invention sous l'action

simultanée d'une pression d'oxygène et de la température selon la méthode TFOUT (Thin Film oxydation Uptake test), ASTM D 2272. L'oxydation est faite en présence de catalyseurs et sur un mince film d'huile.

On détermine le temps d'induction qui précède la chute de pression d'oxygène dans l'autoclave (plus le temps d'induction est élevé, plus les produits sont antioxydants).

| | |
|---|---|
| huile 200N | Ti = 20 mn |
| huile 200N + 1,4 % exemple 2 | Ti = 160 mn |
| huile 200N + 1,2 % exemple 4 | Ti = 180 mn |
| huile 200N + 1,2 % Lz 1395 | Ti = 140 mn. |

**Revendications**

1- Additif aux huiles lubrifiantes à effet extrême-pression, antiusure et antioxydant caractérisé en ce qu'il consiste en un disulfure disymétrique dithiophosphoré répondant à la formule générale

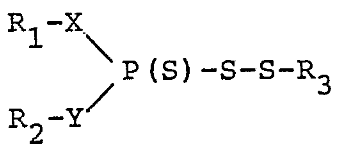

(I)

où X et Y identiques ou différents représentent un atome d'oxygène ou de soufre ou un groupe methylène,- si X et Y représentent un atome d'oxygène ou de soufre, $R_1$, $R_2$ et $R_3$ identiques ou différents représentent un radical hydrocarboné acyclique ou cyclique, saturé, insaturé ou aromatique ou une chaine de formule générale
$R_4\text{-}Z_1\text{-}(R_5\text{-}Z_2)_n R_5\text{-}$ où $Z_1$ et $Z_2$ identiques ou différents correspondent à un atome d'oxygène ou de soufre, $R_4$ correspond à un groupe alkyle, $R_5$ correspond à un groupe alkylène et n est compris entre 0 à 8.
- si X et Y représentent un groupe methylène, $R_1$ et $R_2$ identiques ou différents représentent un atome d'hydrogène ou un radical hydrocarboné et $R_3$ représente un radical hydrocarboné comme décrits précédemment.

2 - Additif selon la revendication 1 caractérisé en ce que dans la formule générale (I) X et Y correspondent à un atome d'oxygène ou de soufre, de préférence à un atome d'oxygène.

3 - Additif selon la revendication 2 caractérisé en ce que $R_1$ et $R_2$ représentent des groupes alkyle en $C_1$ à $C_{22}$, de préférence en $C_1$ à $C_{12}$ ou mieux en $C_1$ à $C_8$.

4 - Additif selon la revendication 2 caractérisé en ce que $R_1$ et $R_2$ représentent des cycles saturés ou aromatiques en $C_5$ à $C_6$, de préférence en $C_6$, substitués ou non.

5 - Additif selon la revendication 2 caractérisé en ce que $R_1$ et $R_2$ représentent une chaine de formule générale $R_4\text{-}Z_1\text{-}(R_5\text{-}Z_2)_n R_5$ - où $Z_1$ et $Z_2$ identiques ou différents correspondent à un atome d'oxygène ou de soufre, de préférence à un atome d'oxygène, $R_4$ correspond à un groupe alkyle en $C_1$ à $C_{12}$ et de préférence en $C_1$ à $C_6$, $R_5$ correspond à un groupe alkylène en $C_2$ à $C_4$ et n est compris entre 0 à 8 et de préférence entre 0 à 3.

6 - Additif selon la revendication 1 caractérisé en ce que dans la formule générale (I) X et Y correspondent à un groupe méthylène et $R_1$ et $R_2$ correspondent à l'hydrogène ou un groupe alkyle en $C_1$ à $C_{21}$, de préférence en $C_1$ à $C_{11}$ ou mieux en $C_1$ à $C_5$.

7 - Additif selon l'une des revendications 1 à 6 caractérisé en ce que $R_3$ correspond à un groupe alkyle saturé ou insaturé en $C_1$ à C 2, de préférence en $C_1$ à $C_6$ ou mieux en $C_2$ à $C_4$ ou à un groupe aralkyle, comme les groupes n-propyle, n-butyle, iso-butyle, allyle, méthallyle ou benzyle.

8 - Procédé de préparation de disulfures de formule générale (I) par condensation d'un composé de formule générale

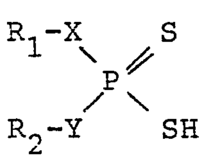

(II)

avec un S-alkylthiosulfate de formule générale
$R_3\text{-S-SO}_3$ M (III)
où $R_1$, $R_2$, $R_3$, X et Y ont les significations précitées et M représente un métal alcalin, alcalinoterreux ou un

ion ammonium, caractérisé en ce que la condensation a lieu dans un milieu biphasique comportant de l'eau et un solvant organique, en présence d'un agent de transfert de phase.

9 - Procédé selon la revendication 8 caractérisé en ce que le solvant organique non miscible à l'eau est le chlorure de methylène ou bien les solvants aromatiques comme le toluène, le chlorobenzène ou les xylènes.

10 - Procédé selon les revendications 8 ou 9 caractérisé en ce que l'agent de transfert de phase est choisi parmi les sels d'ammonium et de phosphonium quaternaires, les résines échangeuses d'ions greffées d'ammoniums quaternaires ou des ethers couronnes.

11 - Procédé selon l'une des revendications 8 à 10 caractérisé en ce que l'agent de transfert de phase est utilisé à une concentration comprise entre 0,2 et 10 % molaire par rapport aux composés de formule générale (II) et de préférence entre 0,5 et 8 % molaire.

12 - Procédé selon l'une des revendications 8 à 11 caractérisé en ce que la température de la réaction varie entre 5 et 150° C en général entre 40 et 90° C et le temps de réaction varie entre 10 minutes et 5 heures.

13 - Composition caractérisée en ce qu'elle renferme une huile lubrifiante d'origine pétrolière ou synthétique et 0,1 et 10 % poids, de préférence 0,1 et 5 % poids d'un additif selon les revendications 1 à 7.

14 - Composition lubrifiante selon la revendication 13 caractérisée en ce qu'elle renferme d'autres additifs usuels des huiles lubrifiantes tels que les détergents dispersants comme les alkylarylsulfonates et les alkylphenates de sodium, de calcium ou de magnésium et les dérivés succiniques et des antioxydants tels que les phenols substitués ou les amines aromatiques.